# EUROPEAN PATENT SPECIFICATION

(11) **EP 3 556 010 B1**
(45) Date of publication and mention of the grant of the patent: **09.10.2024**
(21) Application number: 17823224.5
(22) Date of filing: 14.12.2017
(51) Int. Cl.: H02P 21/05, H02P 6/10, H02P 21/06, H02P 21/00, H02P 6/08

(54) **METHOD AND SYSTEM FOR CONTROLLING A BRUSHLESS ELECTRIC MOTOR**
VERFAHREN UND VORRICHTUNG ZUR STEUERUNG EINES BÜRSTENLOSEN ELEKTROMOTORS
PROCÉDÉ ET SYSTÈME DE COMMANDE D'UN MOTEUR ÉLECTRIQUE SANS BALAIS

(30) Priority: 16.12.2016 IT 201600127693
(43) Date of publication of application: 23.10.2019
(73) Proprietor: Fondazione Istituto Italiano di Tecnologia, 16163 Genova (IT)
(72) Inventor: SCALZO, Alessandro, I-16163 Genova (IT); NATALE, Lorenzo, I-16163 Genova (IT)
(74) Representative: Buzzi, Notaro & Antonielli d'Oulx S.p.A.
(86) International application number: PCT/IB2017/057925
(87) International publication number: WO 2018/109698

(56) References cited:
- EP-A1- 0 836 270
- EP-A2- 2 053 736
- US-A1- 2011 031 914
- US-A1- 2011 316 458
- US-A1- 2013 221 885
- US-A1- 2014 152 212

## Description

### Technical field

The present disclosure relates to a method and a system for closed-loop control of the velocity of a brushless d.c. motor that supplies a torque to a rotating mechanical member, comprising carrying out a control of an FOC (Field-Oriented Control) type that includes: obtaining from a triad of stator phase currents of the motor a pair of currents in a reference system of rotation of the motor; and obtaining from a corresponding pair of voltages in a reference system of rotation of the motor a triad of phase voltages of the motor, a quadrature voltage of said corresponding pair of voltages being obtained via a closed-loop control procedure that comprises measuring an orientation of the rotor, said control method including acquiring a reference angular velocity of the motor to be supplied to the FOC.

### Description of the prior art

In the field of robot systems, one of the components that have a greater effect on the global cost of a robot are the electromechanical actuators, in so far as usually motor reducers of a harmonic-drive type are adopted, which guarantee good efficiency and absence of mechanical backlash, with the disadvantage, however, of a high cost.

A lower-cost solution for reducers of a robot is the one that envisages using reducers of the worm-gear type. These reducers are widely used in the industry because they are sturdy and inexpensive and provide high reduction ratios with a very small number of components, combined with considerable structural simplicity. Furthermore, worm-gear reducers are not reversible, and this renders them a good choice in many applications in which the parts must not move with the motors turned off (for example, for reasons of safety).

However, worm-gear reducers are affected by some drawbacks such as mechanical backlash, high friction, and troublesome vibrations, typically vibrations with low frequency and considerable chatter, and this renders them far from attractive for use in robots.

Chatter is a typical problem in non-reversible mechanical transmissions and is generated by the interaction between the backlash of the gears and the static and dynamic friction of the parts. There exist partial solutions to the problem of chatter, which are not always applicable, such as closing the oil-bath transmission, which, however, requires fluid tightness of the container, whilst the use of grease is ineffective because it is soon expelled by the moving parts in contact. Another approach consists in adding friction on the output of the transmission for damping the effects of backlash, but this entails a further reduction in the efficiency of the motor reducers, which is already low by its very nature. These traditional approaches do not function, unfortunately, for all applications.

Since motor reducers, such as worm-gear reducers, are driven by motors, also the methods for controlling these motors tend to react to phenomena, such as chatter, in order to maintain the reference values set for the control, for example references of position or velocity of the motor.

Here reference is, in particular, made to the case where the motor reducers are driven by brushless d.c. motors.

One of the most advanced techniques for control of brushless motors is the FOC technique. The idea underlying this technique is to use the so-called Clarke-Park transforms, which enable transformation of the three-phase quantities into two-phase quantities (and vice versa via the inverse transform), in a control loop designed to generate electric currents in the three windings of the stator, which are such as to generate the torque required in order to follow a given velocity reference. From the standpoint of a rotating reference system fixed with respect to the rotor, the electrical equation of the brushless motor becomes identical to that of a d.c. motor.

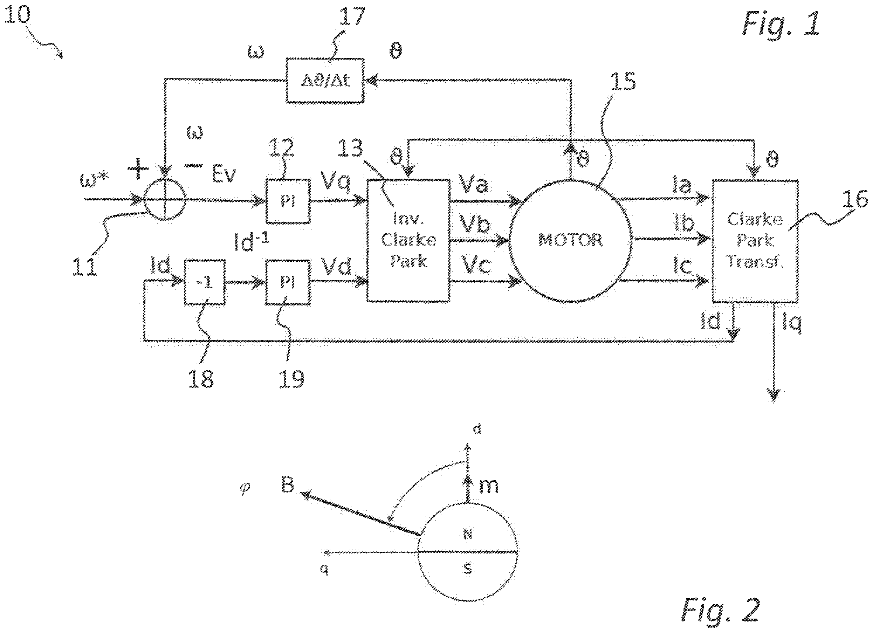

The general scheme of a velocity-control system based upon the FOC method is schematically represented in Figure 1, where the reference number 10 designates as a whole a system for control of the velocity of a brushless motor, designated by 15 in Figure 1. The control system 10 comprises an adder 11 at input thereto. The adder 11 represents the comparison node of a closed-loop control, and, as such, receives a reference value ω* of angular velocity of the motor at a positive input thereof and a measured value ω of the angular velocity of the motor, which is fed back via a position sensor set on the motor 15 that supplies an orientation θ of the rotor, i.e., the angle of orientation of the magnetic-dipole moment vector m of the rotor, as discussed more fully in what follows, to a negative input thereof.

Hence, the adder 11 substantially represents the comparison node of the closed-loop control, which receives as reference set-point the reference angular velocity ω* of the motor and that supplies at output, as regulated quantity, the velocity ω of rotation of the motor, measured by differentiating with respect to time, the orientation of the rotor θ by means of the numeric-differentiation block 17.

In the aforesaid loop, the difference between the reference angular velocity ω* of the rotor at a positive input thereof and the measured value of the angular velocity ω of the motor, i.e., a velocity error Ev, is sent to a proportional-integral controller 12, which produces a quadrature armature voltage Vq. The quadrature armature voltage Vq forms one of the two inputs, together with a direct armature voltage Vd, of a block 13 configured for carrying out the inverse Clarke-Park transform on the above inputs to obtain at output the three voltages Va, Vb, Vc of the stator windings of the motor 15. The measurements of the corresponding electric currents in the three stator windings Ia, Ib, and Ic that are such as to generate the torque required for following the reference are acquired from the motor 15 and supplied to a block 16 configured for carrying out the direct Clarke-Park transform to obtain a direct current Id and a quadrature current Iq. The direct current Id is fed back to a multiplication block 18, which multiplies the direct current Id by -1 to supply the inverse value of the current -Id to a second proportional-integral controller 19, which generates the direct voltage Vd supplied to the block 13 configured for carrying out the inverse Clarke-Park transform as a function of the direct voltage Vd and of the quadrature voltage Vq.

It should be pointed out how in the above position-control system 10, it is envisaged to measure, for example via an encoder (not illustrated in Figure 1) set on the rotor, the position or orientation θ of the rotor of the motor 15, which is supplied to the inverse Clarke-Park transform block 13 and to the direct Clarke-Park transform block 16. In addition, this orientation θ of the rotor in the feedback branch of the closed control loop is supplied to a differentiation module 17, which is configured for computing the time derivative of the position θ to obtain the measured value of the angular velocity ω of the motor, which is fed back to the adder 11, thus implementing the closed-loop control on the angular velocity.

The velocity control implemented by means of a classic FOC procedure is not able to compensate effectively oscillations in the torque value such as the ones that arise during the phenomenon of chatter, or vibration, in a mechanical reducer like a worm gear. In fact, when the resistant torque suddenly decreases, it is altogether the job of the control system to intervene by reducing the current in order to prevent chatter. The effectiveness of this reaction is hence limited by the passband of the control loop, which is typically insufficient in standard control systems to enable timely intervention and suppress the phenomenon of chatter as it arises.

U.S. patent publications US2011/316458 A1, US2013/221885 A1, US2011/031914 A1, US2014/152212 A1 are also part of the technological background.

### Object and summary

An object of one or more embodiments is to overcome the limitations inherent in the solutions that can be achieved by the prior art.

The invention is defined in the independent method claim 1 and in the independent apparatus claim 10, with preferred embodiments disclosed in the dependent claims.

The claims form an integral part of the technical teaching provided herein in relation to the various embodiments.

### Brief description of the drawings

The embodiments will now be described, purely by way of non-limiting example, with reference to the annexed drawings, in which:
- Figure 1 is a schematic illustration of a FOC system of a known type;
- Figure 2 is a diagram illustrating quantities regarding the rotor and the stator of a brushless motor;
- Figure 3 is a schematic illustration of a control system according to the invention;
- Figure 4 is a schematic illustration of a flowchart representing a control method according to the invention;
- Figure 5 and Figure 6 are time charts of quantities representing the behaviour of a brushless motor controlled via the method according to the invention; and
- Figure 7 is a schematic illustration of a variant embodiment of the control system of Figure 3.

### Detailed description of the embodiments

The ensuing description illustrates various specific details in order to provide an in-depth understanding of the embodiments. The embodiments may be implemented without one or more of the specific details, or with other methods, components, materials, etc. In other cases, known operations, materials, or structures are not illustrated or described in detail so that various aspects of the embodiments will not be obscured.

Reference to "an embodiment" or "one embodiment" in the framework of the present description is intended to indicate that a particular configuration, structure, or characteristic described with reference to the embodiment is comprised in at least one embodiment. Likewise, phrases such as "in an embodiment" or "in one embodiment" that may be present in various points of the present description do not necessarily refer precisely to one and the same embodiment. Furthermore, particular conformations, structures, or characteristics may be combined in any adequate way in one or more embodiments.

The references used herein are provided merely for convenience and hence do not define the sphere of protection or scope of the embodiments.

By way of introduction, there is here first illustrated a physical property of interaction between magnetic fields that makes it possible to introduce an intrinsic stability in the control law of the brushless motor. The solution described hereinafter avails itself of the aforesaid physical property. With reference to the diagram of Figure 2, it is an intrinsic stability that derives from the physical law that expresses the torque τ of the motor 15 in proportional to the sine of the angle ϕ between a magnetic-dipole moment vector **m** of the rotor and the magnetic-field vector **B** of the stator, i.e., B·m·sin(ϕ), where B and m are the intensities of the magnetic-dipole moment vector **m** of the rotor and of the magnetic-field vector **B** of the stator of the motor 15. In this way, when the rotor of the motor accelerates and the angle ϕ with the stator magnetic field **B** decreases, the torque τ decreases immediately, without there being necessary any intervention of a controller.

Illustrated in Figure 2 is a direct axis d of the reference system fixed with respect to the rotor that points towards the north pole N of the rotor, whilst a quadrature axis q is rotated through +90° with respect to the direct axis d. The direct axis d and the quadrature axis q represent a reference system of rotation of the motor.

The present applicant has moreover noted that in the physical phenomena that produce chatter, the phenomenon appears, to the best of the knowledge of the present applicant, as being originated by the rapid transition from a condition of static friction to a condition of dynamic friction in a short time interval of the order of a fraction of a second during which the load is free to move forwards thanks to the mechanical backlash between the parts. This time for the condition of free fall due to the mechanical backlash, amounting to a fraction of a second, depends upon various parameters, but by way of example, the torque may indicate a vibration with a frequency in the region of 10-20 Hz, which means that each transient phenomenon involved occurs in times of less than 0.05 s given the periodicity.

Hence, the space due to backlash is recovered when the gear falls on the worm gear of the primary of the transmission, and the static friction reappears after contact. This interpretation also explains the fact that chatter is manifested only when the load and the torque have the same direction, and not when they are opposite. Hence, the acceleration of the rotor during the transition between static friction and dynamic friction appears to be the cause behind the phenomenon of chatter in control systems according to the prior art, where the controller forces the magnetic field ***B*** of the stator to move synchronously with the magnetic-dipole moment **m** of the rotor and hence to accelerate together with the rotor.

Consequently, the method described herein operates so as to prevent the acceleration of the rotor of the brushless motor by rendering the rotation of the stator magnetic field **B** independent of the orientation of the rotor, i.e., of the magnetic-dipole moment **m**.

The solution described hence regards in general a method for closed-loop control of the velocity of a brushless d.c. motor that supplies a torque to a rotational reducer, where, in order to suppress the phenomenon of chatter in motor-reducer systems affected by high static friction and mechanical backlash, a stator magnetic field ***B*** is imposed that rotates at a reference angular velocity ω*, which constitutes the input of the control procedure, independent of the velocity of the rotor.

Unlike the known method of field-oriented control of brushless motors of Figure 1, where the direction of the magnetic field in the stator of the motor 15 is set on the basis of the position of the rotor measured by an encoder, in the solution described, instead, the magnetic field of the stator rotates independently of the position of the rotor. The synchronism between the orientation of the rotor and the orientation of the stator rotating magnetic field is ensured, instead, via a feedback control loop, obtained with a PID (Proportional-Integrative-Derivative) controller, which has as input the difference between the orientation of the rotor and the angular position of the stator magnetic field, and as output a value of armature voltage referred to the quadrature axis of the rotating reference system fixed with respect to the rotor. The PID controller is thus configured for generating a torque that is able to keep the angular position of the rotor locked to a reference angular position, which forms an angle of 90° with respect to the direction of the stator magnetic field, which rotates with an angular velocity independent of the feedback and imposed from outside.

In this way, when the resistant torque suddenly decreases on account of the interaction between static friction and mechanical backlash, it is not possible for the rotor to accelerate in an uncontrolled way because there does not exist a feedback law that forces the direction of the stator magnetic field to accelerate following the rotor. Furthermore, the method exploits the natural characteristic of the law of magnetic moment, where the torque is linked to the angle between the magnetic vector of the stator and the magnetic-dipole moment of the rotor, in a way proportional to the sine of the angle formed between them.

Consequently, when the rotor starts to accelerate with respect to the stator rotating magnetic field, the angle ϕ comprised between the vectors of the stator magnetic field **B** and the magnetic-dipole moment **m** shifts from 90°, and the torque decreases immediately as a direct consequence of the physical law described with reference to Figure 2, thus applying a counter-reaction that slows down the rotor, without any need for intervention of the control system.

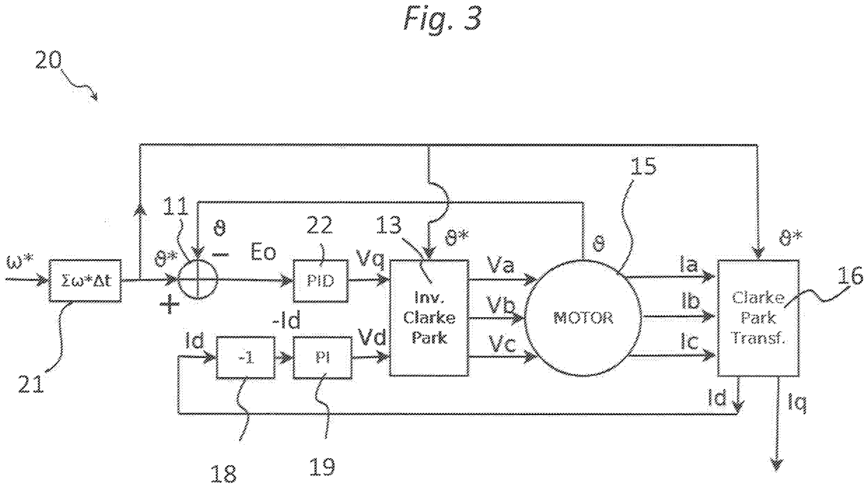

Figure 3 illustrates a system 20 for control of the velocity of a brushless motor 15 according to the invention.

The control system 20 in the first place comprises an integration block 21, which receives the angular-velocity reference value ω* of the motor at input and performs a numeric integration in time Σω*Δt, supplying at output an angular-position reference value, i.e., a reference orientation, θ*, for the rotor, which is then supplied to the adder 11 at the positive input thereof. The adder 11 then directly receives, at a negative input thereof, the measured value of the position, i.e., the orientation, θ of the rotor via a position sensor set on the motor 15, as discussed more fully in what follows.

The difference between the reference orientation θ* at the positive input and the measured value of the orientation θ of the rotor at the negative input, i.e., a position error Eo, is sent to a proportional-integral-derivative control 22, which produces the quadrature armature voltage Vq. The quadrature armature voltage Vq forms one of the two inputs, together with a direct armature voltage Vd, of the block 13 configured for carrying out the inverse Clarke-Park transform on the aforesaid inputs to obtain at output the three phase voltages Va, Vb, Vc of the stator windings of the motor 15. The corresponding electric currents measured in the three windings of the stator Ia, Ib, and Ic such as to generate the torque of the motor 15, in particular the torque required for following the reference orientation θ*, are acquired from the motor 15 and supplied to a block 16 configured for carrying out the direct Clarke-Park transform to obtain a direct current Id and a quadrature current Iq. The direct current Id is fed back to the multiplication block 18, which multiplies it by -1 and supplies the negative value of the direct current -Id to the second proportional-integral controller 19, which generates the direct voltage Vd supplied to the block 13 configured for carrying out the inverse Clarke-Park transform.

According to a main aspect of the solution described, in the aforesaid position-control system 10 it is envisaged to supply the reference orientation θ* to the inverse Clarke-Park transform block 13 and to the direct Clarke-Park transform block 16, unlike what is represent in the diagram of Figure 1 where these two blocks received the measured position value θ.

Since the set constituted by the inverse Clarke-Park transform block 13 and the direct Clarke-Park transform block 16 determines the phase voltages Va, Vb, Vc, which in turn determine the velocity of the stator, these phase voltages are calculated by the blocks 13, 16 in a way independent of the orientation of the rotor θ.

As in the case of field-oriented control, the orientation of the rotor θ must be measured via a corresponding sensor, for example an optical encoder provided with a reset reference mark in a known position with respect to the magnetic-dipole vector (to have an absolute calibration reference). No type of additional or different hardware is necessary for implementing the FOC method here described as compared to the standard FOC method of Figure 1; i.e., any hardware system on which it is possible to implement the FOC is equally suited to implementation of the method described herein.

The position-control system 20 is preferably implemented via an integrated control board comprising one or more microprocessors.

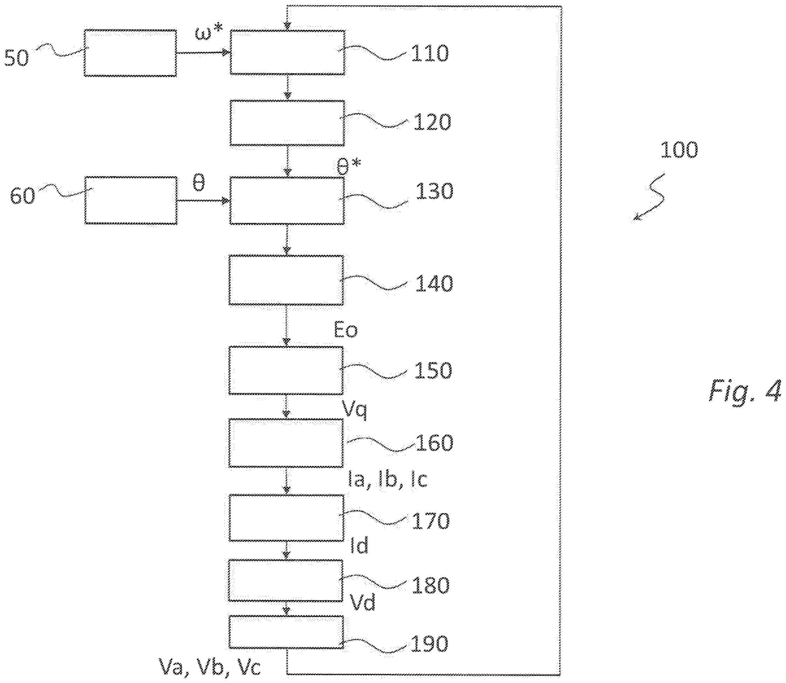

Now, with reference to the control system 20 of Figure 3, described hereinafter are the steps of a possible position-control method for a brushless motor, the method being designated as a whole, in the flowchart illustrated in Figure 4, by the reference 100.

Without this implying any loss of generality, the positive direction of rotation of the motor 15 is assumed as being counterclockwise. As illustrated in Figure 2, the "direct" axis of the reference system fixed with respect to the rotor points towards the north pole of the rotor, whereas the "quadrature" axis is rotated through +90° with respect to the direct axis.

The oriented angle comprised between the quadrature axis q and the direction of 0° in the reference system of the stator is assumed as angular position θ of the rotor. The reference orientation is initialized with the orientation of the rotor measured at start-up.

The control method 100 comprises:
in a step 110, reading the reference angular velocity ω*, which is preferably supplied by a high-level control system, designated by 50, i.e., the control module of the apparatus, for example a robot, in which the motor 15 operates, which supplies the reference angular velocity ω* according to the requirements of the apparatus;
in step 120, carrying out a numeric integration, in particular via the block 21, to obtain the reference instantaneous angular position θ* such that the motor shaft rotates at the reference velocity, following it instant by instant;
in step 130, measuring the orientation θ of the rotor via a sensor 60, for example, as has been said, via an encoder;
in step 140, calculating, , in particular in the adder 11, the orientation error Eo as the difference between the reference orientation θ* and the orientation measured θ;
in step 150, applying a proportional-integrative-derivative transfer function (PID controller 22) using the orientation error Eo as input; the output of the proportional-integrative-derivative transfer function is the quadrature voltage Vq to be applied to the motor 15, expressed in the rotating reference system; the result of applying the PID transfer function via the PID controller 22 within the control loop, which implements a closed-loop proportional-integrative-derivative control procedure, is to force the rotor of the motor 15 to align with the reference orientation θ*, thus generating a torque that will regulate the orientation error Eo to zero;
in a step 160, measuring the three phase currents Ia, Ib, and Ic in the motor 15;
in a step 170, applying the Clarke-Park transforms (module 16) to the phase currents Ia, Ib, and Ic to obtain the direct current Id;
in a step 180, regulating the direct current Id to the zero value via a proportional-integral control 19; the input of the control is the direct current with opposite value -Id, and the output is the value of direct voltage Vd to be applied to the motor for suppressing the direct current Id, which does not contribute to the torque and is entirely dissipated in the form of heat;
in a step 190, applying the inverse Clarke-Park transforms (module 13) to the pair of voltages Vd and Vq thus obtained and obtaining the three phase voltages Va, Vb, Vc to be applied to the motor 15.

The operations 110-190 are repeated cyclically, as is the case in a closed-loop control, following the reference angular velocity ω* of the motor and its variations.

As may be noted from the diagram of Figure 3, the main difference with respect to the conventional FOC described with reference to Figure 1 is that the Clarke-Park transform is calculated in open loop with respect to the orientation of the rotor θ. In this way, the disturbance in the position of the rotor cannot interfere with the generation of the torque, because the rotor cannot "push forward" the stator magnetic field when a sudden drop of friction or resistant torque occurs. This in practice prevents interferences in the resistant torque and sharp variations in the friction of the transmission from possibly triggering the phenomenon of chatter.

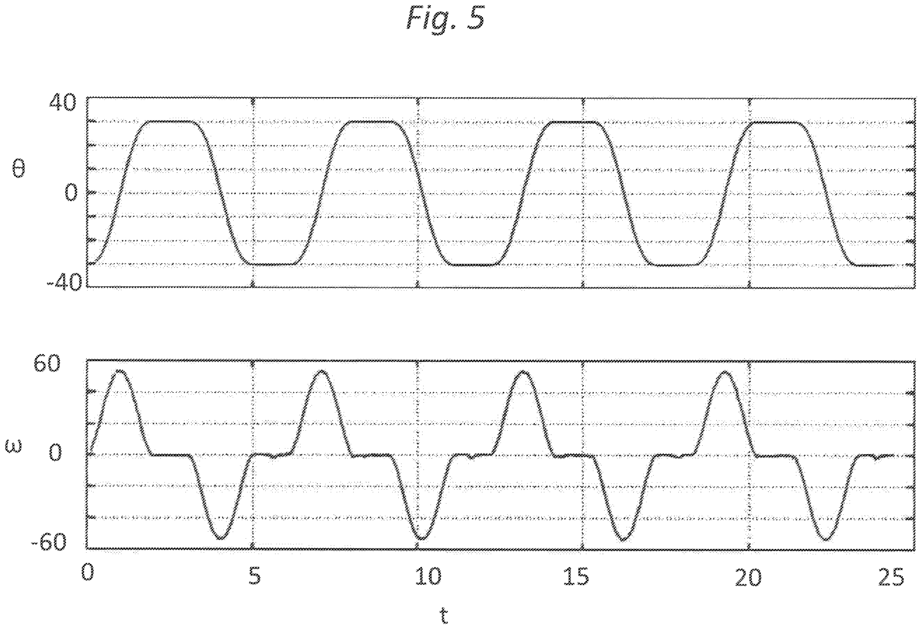

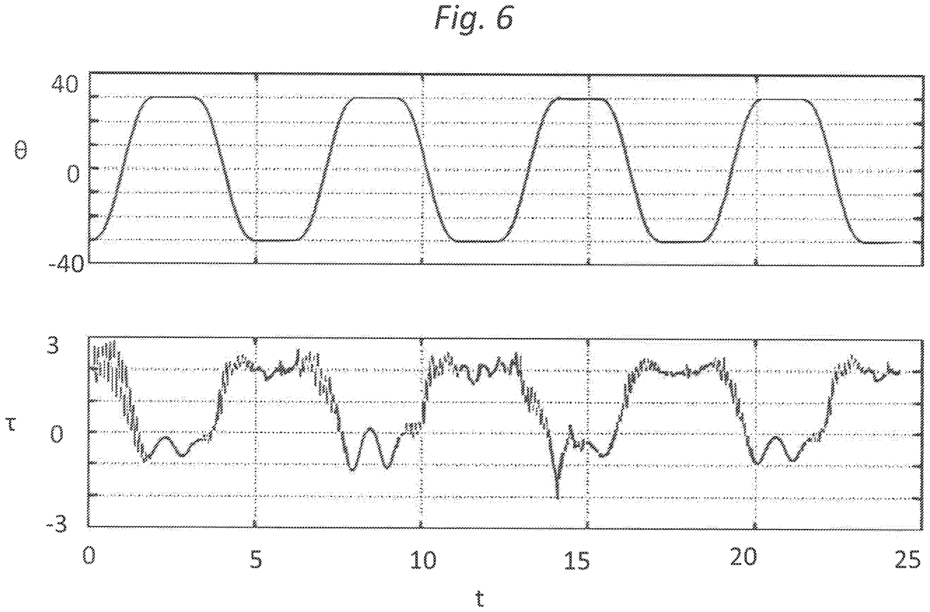

Figures 5 and 6 illustrate results of the method described herein, applied to a brushless motor, in particular Mecapion APM-SA01, which supplies its own torque to an industrial worm-gear reducer Igus with a reduction ratio of 38:1. The control module 20 is implemented in an integrated control board 2FOC produced by Istituto Italiano di Tecnologia. The results refer to position and velocity graphs during tasks of path tracking in different load conditions.

The diagram of Figure 5 shows as a function of time t measured in seconds the plots of the position θ (in degrees) and of the angular velocity ω (in degrees per second) of the rotor for a repeated up-down movement, with minimum-jerk trajectory.

In the graph it may be noted that both in the lifting movement and in the movement of release the phenomenon of chatter is absent. Likewise, in the diagram of Figure 6, which plots the position θ and the torque τ as a function of time in the same test, it may be seen that the oscillations in the torque are limited to the phenomenon of rapid passage from static to dynamic friction, and vice versa, but are not amplified by the system, and their effects on the movement of the reducer are suppressed by the method and apparatus described.

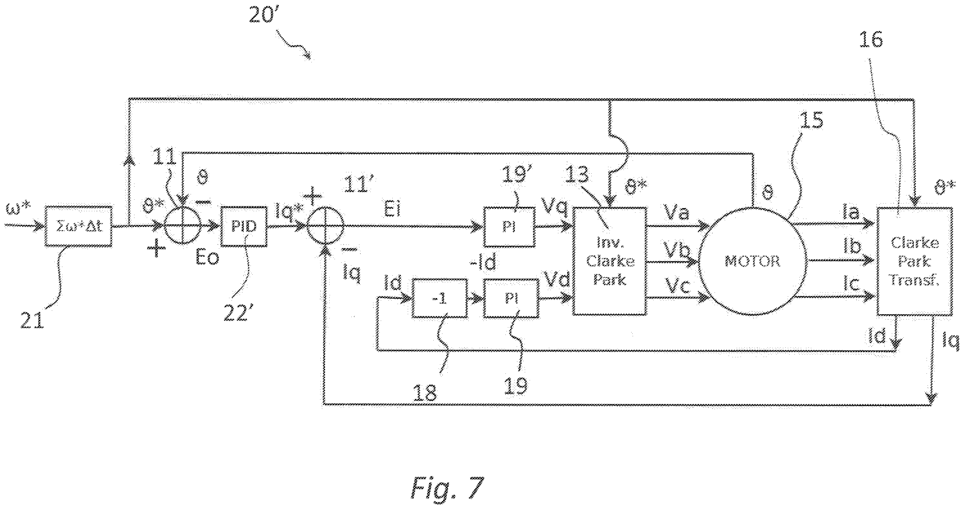

Figure 7 is a schematic illustration of a variant embodiment 20' of the control system 20 of Figure 3. The same reference numbers designate components or elements that substantially the same. In this case, the control system 20' comprises the integration block 21, which receives the angular-velocity reference value of the motor ω* at input and performs a numeric integration in time Σω*Δt, supplying at output an angular-position reference value, i.e., a reference orientation θ* for the rotor, which is then supplied to the adder 11 to its positive input, and hence receives the measured value of the position, i.e., the orientation θ of the rotor, via the position sensor set on the motor 15. Also in this case, the difference between the reference orientation θ* at the positive of the adder 11 and the measured value of the orientation θ of the rotor, namely, the position error Eo, is sent to a proportional-integral-derivative controller 22', the transfer function of which is configured for producing, in this case, not the quadrature armature voltage Vq, but rather a reference quadrature current Iq*. The reference current Iq* represents the set-point of an internal loop that comprises another comparison node 11', which is also an adder, which computes the difference between the reference quadrature current Iq* and the quadrature current Iq, acquired from the direct Clarke-Park transform block 16, namely, a current error Ei. The current error Ei is supplied to a proportional-integral controller 22', configured for generating the quadrature armature voltage Vq, which is supplied in a way similar to what is represented in Figure 3, to the inverse Clarke-Park transform block 13 and has a value such as to determine a quadrature current Iq equal to the reference quadrature current Iq*.

Hence, the internal loop 11', 19' that uses the output of the PID controller 22' as reference where the quadrature current Iq is picked up as feedback quantity, substantially corresponds to a variant of the aforesaid operation 150 of using the orientation error Eo as input variable of a transfer function that applies at least one proportional action and one integrative action, in particular a PID action, 22', which supplies at output said quadrature voltage Vq to be applied to the motor 15, expressed in the rotating reference system, where it is envisaged to: use the aforesaid orientation error Eo as input variable of a transfer function that applies at least one proportional action and one integrative action that supplies at output a reference quadrature current; calculate a current error Ei as the difference between the reference quadrature current and the quadrature current Iq; and use the current error Ei as input variable of a transfer function that applies at least one proportional action and one integrative action 19' that supplies at output the quadrature voltage Vq to be applied to the motor 15 expressed in the rotating reference system.

The solution according to the various embodiments described herein affords the advantages listed in what follows.

The method described is advantageously of a FOC type, hence maintaining all the advanced characteristics thereof in conditions of uniform rotation (with continuous resistant torque). The method described, by performing the open-loop calculation of the Clarke-Park transforms, enables generation of the stator rotating magnetic field to be rendered independent of the angular position of the rotor.

When there is disturbance in the resistant torque and rapid transitions from static friction to dynamic friction (chattering), known FOC methods react to the sudden accelerations compatibly with the passband of the controller. In the case of chatter, typically this is not sufficient to wipe out the effects of disturbance. Consequently, the perturbations in the position of the rotor interfere with generation of the torque, because the rotor "pushes forward" the stator magnetic field, amplifying the disturbance generated by the resistant torque with a phenomenon of resonance that is at the origin of the chatter. Instead, in the solution described, an intrinsic stability is exploited that derives from the physical law that expresses the torque in a way proportional to the sine of the angle between the magnetic-dipole moment **m** of the rotor and the magnetic field **B** of the stator. Thus, when the rotor accelerates and the angle with the stator magnetic field decreases, the torque decreases immediately, without any intervention of the controller being necessary.

Of course, without prejudice to the principles underlying the embodiments, the details of construction and the embodiments may vary widely with respect to what has been described and illustrated herein purely to way of example, without thereby departing from the scope of the present embodiments, as defined by the ensuing claims.

The method described may be applied to reducers of a worm-gear type or other rotational motor-reducer systems, to reducers of an external-screw/internal-screw type or to direct-drive systems, where the torque is supplied by a brushless motor controlled by an electronic board. The solution described herein finds application in integrated mechatronic, in industrial robotics, and in the automotive field.

In various embodiments, the motor and the reducer are comprised in a robot, and the rotational reducer is a worm gear or else some other rotational-reducer system compatible with the embodiment required by the robot.

Suppression of chatter occurs irrespective of the mode used for following the reference that rotates in open loop; consequently, it is possible to use embodiments alternative to PID control, which will be compatible with the method as described and claimed.

The PID control, with the derivative component improves precision, in particular since it has available a good measurement of velocity of the rotor and a reference that is already supplied as velocity. However, it is possible also to use a proportional-integral (PI) controller; in this case, the instantaneous error of velocity presents wider oscillations. In other words, the orientation error may be used as input variable of a transfer function that applies at least one proportional action and one integrative action, i.e., a PI controller, or else as input of a controller that adds to this the derivative action, i.e., a PID controller. Hence, the control module 22 and the control module 22' may specifically be only proportional-integral control modules.

By "motor-reducer systems affected by high levels of static friction and mechanical backlash" are typically meant non-reversible reducers, in which hence the efficiency is considerably lower than 50% on account of friction. For instance, for a worm gear the typical efficiency is approximately 30%. As regards mechanical backlash on the secondary, it is, for example, of 2°.

The method described may be applied in general also to motors without motor-reduction, connected to rotating mechanical members that may or may not be affected by chatter. In the case where they are not affected by chatter, the performance is equivalent to that of a FOC control of a known type, whereas, in the case of rotating members affected by chatter, the method described presents the advantages referred to above.

## Claims

1. A method for closed-loop control of the velocity of a brushless d.c. motor, which supplies a torque (τ) to a rotating mechanical member, comprising carrying out a control of a FOC (Field-Oriented Control) type (10, 20) comprising:
obtaining (16), from a triad of stator phase currents (Ia, Ib, Ic) of the motor, a pair of currents (Id, Iq) in a reference system of rotation of the motor (15); and
obtaining, from a corresponding pair of voltages (Vq, Vd) in a reference system of rotation of the motor (15), a triad of phase voltages (Va, Vb, Vc) of the motor (15),
a quadrature voltage (Vq) of said corresponding pair of voltages (Vq, Vd) being obtained via a closed-loop control procedure (140) comprising measuring (130) an orientation of the rotor (Θ),
said control method (100) comprising (110) acquiring a reference angular velocity (ω*) of the motor to be supplied to the control of a FOC type (10, 20),
said method being **characterized in that**:
said closed-loop control procedure (140) comprises regulating the orientation of the rotor (Θ) to follow a reference orientation (Θ*), independent of the velocity of the rotor, which forms an angle of 90° with respect to a direction of a stator magnetic field (B) and, which rotates with an angular velocity equal to said reference angular velocity (ω*), wherein said closed-loop control procedure (140) that comprises regulating the orientation of the rotor (Θ) to follow a reference orientation (Θ*) comprises the steps of:
carrying out (120) an integration of said reference angular velocity (ω*) to obtain the reference orientation (θ*);
calculating (140) an orientation error (Eo) as the difference between said reference orientation (Θ*) and said measured orientation (Θ); and
using (150) said orientation error (Eo) as input variable of a transfer function that applies at least one proportional action and one integrative action (22; 22', 19') and supplies at output said quadrature voltage (Vq) to be applied to the motor (15) expressed in the rotating reference system,
said operation of obtaining (16) from a triad of stator phase currents (Ia, Ib, Ic) of the motor a pair of currents (Id, Iq) in a reference system of rotation of the motor (15) comprises applying to said triad of stator phase currents (Ia, Ib, Ic) a direct Clarke-Park transform as a function of said reference orientation (θ*), and said operation of obtaining from a corresponding pair of voltages (Vq, Vd) in a reference system of rotation of the motor (15) a triad of phase voltages (Va, Vb, Vc) of the motor (15) comprises applying an inverse Clarke-Park transform to said pair of voltages (Vq, Vd) as a function of said reference orientation (θ*), wherein said reference orientation (θ*) is supplied to said inverse Clarke-Park transform (13) and to said direct Clarke-Park transform (16).

2. The method according to Claim 1, **characterized in that** it envisages using (150) said orientation error (Eo) as input variable of a transfer function of a proportional-integrative-derivative type (22; 22', 19').

3. The method according to Claim 1, **characterized in that** it comprises regulating (170) a direct current (Id) of said pair of currents (Id, Iq) to the zero value via a module that implements a proportional-integral transfer function (19) that supplies at output a direct voltage (Vd) of said pair of voltages (Vq, Vd) .

4. The method according to Claim 1, **characterized in that** said operation of acquiring a reference angular velocity (ω*) of the motor comprises acquiring said reference angular velocity (ω*) from a control system of the apparatus (50) in which the motor (15) operates.

5. The method according to Claim 1, **characterized in that** said step of carrying out (120) an integration of said reference angular velocity (ω*) to obtain a reference orientation (Θ*) comprises carrying out (120) a numeric integration of said reference angular velocity (ω*) to obtain an instantaneous reference angular position (Θ*) such that the motor shaft rotates at the reference velocity (ω*) in order to follow said instantaneous reference angular position (Θ*) instant by instant.

6. The method according to Claim 1, **characterized in that** said operation of measuring (130) an orientation of the rotor (Θ) comprises carrying out the measurement via a corresponding sensor, in particular an encoder operating on the rotor of the motor (15).

7. The method according to any one of Claims 1 to 6, **characterized in that**:
said operation of using (150) said orientation error (Eo) as input variable of a transfer function that applies at least one proportional action and one integrative action (22; 22', 19') that supplies at output said quadrature voltage (Vq) to be applied to the motor (15) expressed in the rotating reference system comprises:
using said orientation error (Eo) as input variable of a transfer function that applies at least one proportional action and one integrative action (22') that supplies at output a reference quadrature current (Iq*);
calculating a current error (Ei) as the difference between the reference quadrature current (Iq*) and a quadrature current (Iq) of said pair of currents (Id, Iq); and
using said current error (Ei) as input variable of a transfer function that applies at least one proportional action and one integrative action (19') that supplies at output said quadrature voltage (Vq) to be applied to the motor (15) expressed in the rotating reference system.

8. The method according to any one of the preceding claims, **characterized in that** said rotating mechanical member is a rotational reducer.

9. The method according to Claim 8, **characterized in that** said rotational reducer is a worm gear.

10. A system for closed-loop control of the velocity of a brushless d.c. motor that supplies a torque (τ) to a rotating mechanical member, comprising carrying out a control module of a FOC type (10, 20) comprising:
a module configured for obtaining (16), from a triad of stator phase currents (Ia, Ib, Ic) of the motor, a pair of currents (Id, Iq) in a reference system of rotation of the motor (15);
a module (13) configured for obtaining, from a corresponding pair of voltages (Vq, Vd) in a reference system of rotation of the motor (15), a triad of phase voltages (Va, Vb, Vc) of the motor (15); and
a closed-loop control chain (11, 17, 13; 11, 22, 13; 11, 22', 19', 13) configured for obtaining a quadrature voltage (Vq) of said corresponding pair of voltages (Vq, Vd) and comprising means (130) for measuring an orientation of the rotor (Θ),
said system being configured for acquiring a reference angular velocity (ω*) of the motor to be supplied to the control of a FOC type (10, 20),
said system being **characterized in that**:
said closed-loop control chain (11, 22, 13; 11, 22', 19', 13) is configured for regulating the orientation of the rotor (Θ) to follow a reference orientation (Θ*), independent of the velocity of the rotor, which forms an angle of 90° with respect to a direction of a stator magnetic field (B), which rotates with an angular velocity equal to said reference angular velocity (ω*),
**in that** said system comprises:
a module (21) configured for carrying out (120) an integration of said reference angular velocity (ω*) to obtain a reference orientation (Θ*),
and **in that** said closed-loop control chain (11, 22) comprises:
a module (11) configured for calculating (140) an orientation error (Eo) as the difference between said reference orientation (Θ*) and said measured orientation (Θ); and
a module (22; 22') configured for implementing a transfer function that applies at least one proportional action and one integrative action and for receiving said orientation error (Eo) as input variable and for supplying at output said quadrature voltage (Vq) to be applied to the motor (15) expressed in the rotating reference system,
wherein
said module configured for obtaining (16) from a triad of stator phase currents (Ia, Ib, Ic) of the motor a pair of currents (Id, Iq) in a reference system of rotation of the motor (15) is configured for applying to said triad of stator phase currents (Ia, Ib, Ic) a direct Clarke-Park transform as a function of said reference orientation (Θ*), and said module (13) configured for obtaining from a corresponding pair of voltages (Vq, Vd) in a reference system of rotation of the motor (15) a triad of phase voltages (Va, Vb, Vc) of the motor (15) comprising applying an inverse Clarke-Park transform to said pair of voltages (Vq, Vd) as a function of said reference orientation (Θ*), said system being configured to supply said reference orientation (Θ*) to the inverse Clarke-Park transform block (13) and to the direct Clarke-Park transform block (16).

11. The system for closed-loop control according to Claim 10, **characterized in that** the module (22') configured for implementing a transfer function that applies at least one proportional action and one integrative action is configured for using said orientation error (Eo) as input variable of a transfer function that applies at least one proportional action and one integrative action (22') that supplies at output a reference quadrature current (Iq*), and **in that** it comprises:
a module (11') configured for calculating a current error (Ei) as the difference between the reference quadrature current (Iq*) and a quadrature current (Iq) of said pair of currents (Id, Iq); and
a module (11') configured for implementing at least one proportional action and one integrative action (19') and for receiving said current error (Ei) as input variable and for supplying at output said quadrature voltage (Vq) to be applied to the motor (15) expressed in the rotating reference system.

12. The system for closed-loop control according to Claim 10, **characterized in that** it comprises a module (22; 22') that implements a transfer function of a proportional-integrative-derivative type.

13. The system for closed-loop control according to any one of Claims 10 to 12, **characterized in that** said mechanical member is a rotational reducer.

14. The system for closed-loop control according to any one of Claims 10 to 13, **characterized in that** said motor (15) and said rotational reducer are comprised in a robot and **in that** said rotational reducer is a worm gear.

## Patentansprüche

1. Verfahren zur Regelung der Geschwindigkeit eines bürstenlosen Gleichstrommotors, der ein Drehmoment (τ) für ein drehendes mechanisches Glied liefert, umfassend das Ausführen einer Regelung eines feldorientierten Typs (10, 20), umfassend:
Gewinnen (16) eines Paares von Strömen (Id, Iq) in einem Referenzsystem der Drehung des Motors (15) aus einer Triade von Statorphasenströmen (Ia, Ib, Ic) des Motors und
Gewinnen einer Triade von Phasenspannungen (Va, Vb, Vc) des Motors (15) aus einem entsprechenden Paar von Spannungen (Vq, Vd) in einem Referenzsystem der Drehung des Motors (15),
wobei eine Quadraturspannung (Vq) des entsprechenden Paares von Spannungen (Vq, Vd) über ein Regelungsverfahren (140) gewonnen wird, welches das Messen (130) einer Orientierung des Rotors (θ) umfasst,
wobei das Regelungsverfahren (100) das Erfassen einer Referenz-Winkelgeschwindigkeit (ω*) des Rotors, die an die Regelung eines feldorientierten Typs (10, 20) zu liefernist, umfasst (110),
wobei das Verfahren **dadurch gekennzeichnet ist, dass**:
das Regelungsverfahren (140) das Regulieren der Orientierung des Rotors (θ) derart umfasst, dass sie einer Referenzorientierung (θ*) folgt, unabhängig von der Geschwindigkeit des Rotors, der einen Winkel von 90° in Bezug auf eine Richtung eines Statormagnetfeldes (B) bildet und der sich mit einer Winkelgeschwindigkeit dreht, die gleich der Referenz-Winkelgeschwindigkeit (ω*) ist, wobei das Regelungsverfahren (140), welches das Regulieren der Orientierung des Rotors (Θ) derart umfasst, dass sie einer Referenzorientierung (Θ*) folgt, die folgenden Schritte umfasst:
Ausführen (120) einer Integration der Referenz-Winkelgeschwindigkeit (ω*), um die Referenzorientierung (θ*) zu gewinnen,
Berechnen (140) eines Orientierungsfehlers (Eo) als die Differenz zwischen der Referenzorientierung (θ*) und der gemessenen Orientierung (θ), und
Verwenden (150) des Orientierungsfehlers (Eo) als Eingangsvariable einer Übertragungsfunktion, die mindestens einen proportionalen Vorgang und einen integrativen Vorgang (22; 22', 19') anwendet und am Ausgang die Quadraturspannung (Vq) liefert, die an den Motor (15) anzulegen ist, ausgedrückt in dem drehenden Referenzsystem,
wobei die Operation des Gewinnens (16) eines Paares von Strömen (Id, Iq) in einem Referenzsystem der Drehung des Motors (15) aus einer Triade von Statorphasenströmen (Ia, Ib, Ic) des Motors das Anwenden einer direkten Clarke-Park-Transformation auf die Triade von Statorphasenströmen (Ia, Ib, Ic) als eine Funktion der Referenzorientierung (θ*) umfasst und die Operation des Gewinnens einer Triade von Phasenspannungen (Va, Vb, Vc) des Motors (15) aus einem entsprechenden Paar von Spannungen (Vq, Vd) in einem Referenzsystem der Drehung des Motors (15) das Anwenden einer inversen Clarke-Park-Transformation auf das Paar von Spannungen (Vq, Vd) als eine Funktion der Referenzorientierung (θ*) umfasst, wobei die Referenzorientierung (Θ*) an die inverse Clarke-Park-Transformation (13) und die direkte Clarke-Park-Transformation (16) geliefert wird.

2. Verfahren nach Anspruch 1, **dadurch gekennzeichnet, dass** es das Verwenden (150) des Orientierungsfehlers (Eo) als Eingangsvariable einer Übertragungsfunktion eines proportional-integral-derivativen Typs (22; 22', 19') vorsieht.

3. Verfahren nach Anspruch 1, **dadurch gekennzeichnet, dass** es das Regulieren (170) eines Gleichstroms (Id) des Paares von Strömen (Id, Iq) auf den Null-Wert über ein Modul umfasst, das eine proportional-integrale Übertragungsfunktion (19) implementiert, die am Ausgang eine Gleichspannung (Vd) des Paares von Spannungen (Vq, Vd) liefert.

4. Verfahren nach Anspruch 1, **dadurch gekennzeichnet, dass** die Operation des Erfassens einer Referenz-Winkelgeschwindigkeit (ω*) des Motors das Erfassen der Referenz-Winkelgeschwindigkeit (ω*) von einem Regelungssystem der Vorrichtung (50), in dem der Motor (15) tätig ist, umfasst.

5. Verfahren nach Anspruch 1, **dadurch gekennzeichnet, dass** der Schritt des Ausführens (120) einer Integration der Referenz-Winkelgeschwindigkeit (ω*), um eine Referenzorientierung (θ*) zu gewinnen, das Ausführen (120) einer numerischen Integration der Referenz-Winkelgeschwindigkeit (ω*) umfasst, um eine momentane Referenz-Winkelposition (Θ*) zu gewinnen, so dass sich die Motorwelle mit der Referenzgeschwindigkeit (ω*) derart dreht, dass sie der momentanen Referenz-Winkelposition (θ*) Moment für Moment folgt.

6. Verfahren nach Anspruch 1, **dadurch gekennzeichnet, dass** die Operation des Messens (130) einer Orientierung des Rotors (θ) das Ausführen der Messung über einen entsprechenden Sensor umfasst, insbesondere einen Messgeber, der an dem Rotor des Motors (15) tätig ist.

7. Verfahren nach einem der Ansprüche 1 bis 6, **dadurch gekennzeichnet, dass**:
die Operation des Verwendens (150) des Orientierungsfehlers (Eo) als Eingangsvariable einer Übertragungsfunktion, die mindestens einen proportionalen Vorgang und einen integrativen Vorgang (22; 22', 19') anwendet und die am Ausgang die Quadraturspannung (Vq) liefert, die an den Motor (15) anzulegen ist, ausgedrückt in dem drehenden Referenzsystem, Folgendes umfasst:
Verwenden des Orientierungsfehlers (Eo) als Eingangsvariable einer Übertragungsfunktion, die mindestens einen proportionalen Vorgang und einen integrativen Vorgang (22') anwendet und am Ausgang einen Referenz-Quadraturstrom (Iq*) liefert,
Berechnen eines Stromfehlers (Ei) als die Differenz zwischen dem Referenz-Quadraturstrom (Iq*) und einem Quadraturstrom (Iq) des Paares von Strömen (Id, Iq), und
Verwenden des Stromfehlers (Ei) als Eingangsvariable einer Übertragungsfunktion, die mindestens einen proportionalen Vorgang und einen integrativen Vorgang (19') anwendet und die am Ausgang die Quadraturspannung (Vq) liefert, die an den Motor (15) anzulegen ist, ausgedrückt in dem drehenden Referenzsystem.

8. Verfahren nach einem der vorhergehenden Ansprüche, **dadurch gekennzeichnet, dass** das drehende mechanische Glied ein Drehminderer ist.

9. Verfahren nach Anspruch 8, **dadurch gekennzeichnet, dass** der Drehminderer ein Schneckengetriebe ist.

10. System zur Regelung der Geschwindigkeit eines bürstenlosen Gleichstrommotors, der ein Drehmoment (τ) für ein drehendes mechanisches Glied liefert, umfassend das Ausführen eines Regelungsmoduls eines feldorientierten Typs (10, 20), umfassend:
ein Modul, das konfiguriert ist zum Gewinnen (16) eines Paares von Strömen (Id, Iq) in einem Referenzsystem der Drehung des Motors (15) aus einer Triade von Statorphasenströmen (Ia, Ib, Ic) des Motors,
ein Modul (13), das konfiguriert ist zum Gewinnen einer Triade von Phasenspannungen (Va, Vb, Vc) des Motors (15) aus einem entsprechenden Paar von Spannungen (Vq, Vd) in einem Referenzsystem der Drehung des Motors (15), und
eine Regelungskette (11, 17, 13; 11, 22, 13; 11, 22', 19', 13), die konfiguriert ist zum Gewinnen einer Quadraturspannung (Vq) des entsprechenden Paares von Spannungen (Vq, Vd) und Mittel (130) zum Messen einer Orientierung des Rotors (θ) umfasst,
wobei das System konfiguriert ist zum Erfassen einer Referenz-Winkelgeschwindigkeit (ω*) des Motors, die an die Regelung eines feldorientierten Typs (10, 20) zu liefern ist,
wobei das System **dadurch gekennzeichnet ist, dass**:
die Regelungskette (11, 22, 13; 11, 22', 19', 13) konfiguriert ist zum Regulieren der Orientierung des Rotors (Θ) derart, dass sie einer Referenzorientierung (θ*) folgt, unabhängig von der Geschwindigkeit des Rotors, der einen Winkel von 90° in Bezug auf eine Richtung des Statormagnetfeldes (B) bildet und der sich mit einer Winkelgeschwindigkeit dreht, die gleich der Referenz-Winkelgeschwindigkeit (ω*) ist,
und dadurch, dass das System Folgendes umfasst:
ein Modul (21), das konfiguriert ist zum Ausführen (120) einer Integration der Referenz-Winkelgeschwindigkeit (ω*), um eine Referenzorientierung (θ*) zu gewinnen,
und dadurch, dass die Regelungskette (11, 22) Folgendes umfasst:
ein Modul (11), das konfiguriert ist zum Berechnen (140) eines Orientierungsfehlers (Eo) als die Differenz zwischen der Referenzorientierung (Θ*) und der gemessenen Orientierung (θ), und
ein Modul (22; 22'), das konfiguriert ist zum Durchführen einer Übertragungsfunktion, die mindestens einen proportionalen Vorgang und einen integrativen Vorgang anwendet, und zum Empfangen des Orientierungsfehlers (Eo) als Eingangsvariable und zum Liefern der Quadraturspannung (Vq) am Ausgang, die an den Motor (15) anzulegen ist, ausgedrückt in dem drehenden Referenzsystem,
wobei das Modul, das konfiguriert ist zum Gewinnen (16) eines Paares von Strömen (Id, Iq) in einem Referenzsystem der Drehung des Motors (15) aus einer Triade von Statorphasenströmen (Ia, Ib, Ic) des Motors, konfiguriert ist zum Anwenden einer direkten Clarke-Park-Transformation auf die Triade von Statorphasenströmen (Ia, Ib, Ic) als eine Funktion der Referenzorientierung (θ*), und das Modul (13) konfiguriert ist zum Gewinnen einer Triade von Phasenspannungen (Va, Vb, Vc) des Motors (15) aus einem entsprechenden Paar von Spannungen (Vq, Vd) in einem Referenzsystem der Drehung des Motors (15), umfassend das Anwenden einer inversen Clarke-Park-Transformation auf das Paar von Spannungen (Vq, Vd) als eine Funktion der Referenzorientierung (θ*), wobei das System konfiguriert ist zum Liefern der Referenzorientierung (θ*) zu der inversen Clarke-Park-Transformation (13) und zu der direkten Clarke-Park-Transformation (16).

11. System zur Regelung nach Anspruch 10, **dadurch gekennzeichnet, dass** das Modul (22'), das konfiguriert ist zum Durchführen einer Übertragungsfunktion, die mindestens einen proportionalen Vorgang und einen integrativen Vorgang anwendet, konfiguriert ist zum Verwenden des Orientierungsfehlers (Eo) als Eingangsvariable einer Übertragungsfunktion, die mindestens einen proportionalen Vorgang und einen integrativen Vorgang (22') anwendet, die am Ausgang einen Referenz-Quadraturstrom (Iq*) liefert, und dadurch, dass es Folgendes umfasst:
ein Modul (11'), das konfiguriert ist zum Berechnen eines Stromfehlers (Ei) als die Differenz zwischen dem Referenz-Quadraturstrom (Iq*) und einem Quadraturstrom (Iq) des Paares von Strömen (Id, Iq), und
ein Modul (11'), das konfiguriert ist zum Durchführen mindestens eines proportionalen Vorgangs und eines integrativen Vorgangs (19') und zum Empfangen des Stromfehlers (Ei) als Eingangsvariable und zum Liefern der Quadraturspannung (Vq) am Ausgang, die an den Motor (15) anzulegen ist, ausgedrückt in dem drehenden Referenzsystem.

12. System zur Regelung nach Anspruch 10, **dadurch gekennzeichnet, dass** es ein Modul (22; 22') umfasst, das eine Übertragungsfunktion eines proportional-integral-derivativen Typs durchführt.

13. System zur Regelung nach einem der Ansprüche 10 bis 12, **dadurch gekennzeichnet, dass** das mechanische Glied ein Drehminderer ist.

14. System zur Regelung nach einem der Ansprüche 10 bis 13, **dadurch gekennzeichnet, dass** der Motor (15) und der Drehminderer in einem Roboter enthalten sind, und dadurch, dass der Drehminderer ein Schneckengetriebe ist.

## Revendications

1. Procédé de commande en boucle fermée de la vitesse d'un moteur à courant continu sans balais, qui fournit un couple (t) à un organe mécanique rotatif, comportant la réalisation d'une commande de type vectoriel, FOC, (10, 20) comportant :
l'obtention (16), à partir d'une triade de courants de phases (Ia, Ib, Ic) de stator du moteur, d'une paire de courants (Id, Iq) dans un repère de rotation du moteur (15) ; et
l'obtention, à partir d'une paire correspondante de tensions (Vq, Vd) dans un repère de rotation du moteur (15), d'une triade de tensions de phases (Va, Vb, Vc) du moteur (15),
une tension en quadrature (Vq) de ladite paire correspondante de tensions (Vq, Vd) étant obtenue par l'intermédiaire d'une procédure (140) de commande en boucle fermée comportant la mesure (130) d'une orientation du rotor (Θ),
ledit procédé (100) de commande comportant (110) l'acquisition d'une vitesse angulaire de référence (ω*) du moteur à fournir à la commande de type FOC (10, 20),
ledit procédé étant **caractérisé en ce que** :
ladite procédure (140) de commande en boucle fermée comporte la régulation de l'orientation du rotor (Θ) pour suivre une orientation de référence (Θ*), indépendante de la vitesse du rotor, qui forme un angle de 90° par rapport à une direction d'un champ magnétique (B) de stator et qui tourne avec une vitesse angulaire égale à ladite vitesse angulaire de référence (ω*),ladite procédure (140) de commande en boucle fermée qui comporte la régulation de l'orientation du rotor (θ) pour suivre une orientation de référence (θ*) comportant les étapes consistant à :
réaliser (120) une intégration de ladite vitesse angulaire de référence (ω*) pour obtenir l'orientation de référence (θ*) ;
calculer (140) une erreur d'orientation (Eo) comme la différence entre ladite orientation de référence (θ*) et ladite orientation mesurée (Θ) ; et
utiliser (150) ladite erreur d'orientation (Eo) comme variable d'entrée d'une fonction de transfert qui applique au moins une action proportionnelle et une action intégrative (22 ; 22', 19') et fournit en sortie ladite tension en quadrature (Vq) à appliquer au moteur (15) exprimée dans le repère tournant,
ladite opération d'obtention (16), à partir d'une triade de courants de phases (Ia, Ib, Ic) de stator du moteur, d'une paire de courants (Id, Iq) dans un repère de rotation du moteur (15) comportant l'application à ladite triade de courants de phases (Ia, Ib, Ic) de stator d'une transformation de Clarke-Park directe en fonction de ladite orientation de référence (Θ*), et ladite opération d'obtention, à partir d'une paire correspondante de tensions (Vq, Vd) dans un repère de rotation du moteur (15), d'une triade de tensions de phases (Va, Vb, Vc) du moteur (15) comportant l'application d'une transformation de Clarke-Park inverse à ladite paire de tensions (Vq, Vd) en fonction de ladite orientation de référence (Θ*), ladite orientation de référence (θ*) étant fournie à ladite transformation de Clarke-Park inverse (13) et à ladite transformation de Clarke-Park directe (16).

2. Procédé selon la revendication 1, **caractérisé en ce qu'**il envisage l'utilisation (150) de ladite erreur d'orientation (Eo) comme variable d'entrée d'une fonction de transfert de type proportionnelle, intégrale et dérivée (22 ; 22', 19').

3. Procédé selon la revendication 1, **caractérisé en ce qu'**il comporte la régulation (170) d'un courant direct (Id) de ladite paire de courants (Id, Iq) à la valeur nulle par l'intermédiaire d'un module qui met en oeuvre une fonction de transfert proportionnelle-intégrale (19) qui fournit en sortie une tension directe (Vd) de ladite paire de tensions (Vq, Vd).

4. Procédé selon la revendication 1, **caractérisé en ce que** ladite opération d'acquisition d'une vitesse angulaire de référence (ω*) du moteur comporte l'acquisition de ladite vitesse angulaire de référence (ω*) à partir d'un système de commande de l'appareil (50) dans lequel fonctionne le moteur (15).

5. Procédé selon la revendication 1, **caractérisé en ce que** ladite étape consistant à réaliser (120) une intégration de ladite vitesse angulaire de référence (ω*) pour obtenir une orientation de référence (θ*) comporte la réalisation (120) d'une intégration numérique de ladite vitesse angulaire de référence (ω*) pour obtenir une position angulaire de référence instantanée (θ*) de telle façon que l'arbre du moteur tourne à la vitesse de référence (ω*) afin de suivre ladite position angulaire de référence instantanée (θ*) instant par instant.

6. Procédé selon la revendication 1, **caractérisé en ce que** ladite opération de mesure (130) d'une orientation du rotor (Θ) comporte la réalisation de la mesure par l'intermédiaire d'un capteur correspondant, en particulier un codeur fonctionnant sur le rotor du moteur (15).

7. Procédé selon l'une quelconque des revendications 1 à 6, **caractérisé en ce que** :
ladite opération d'utilisation (150) de ladite erreur d'orientation (Eo) comme variable d'entrée d'une fonction de transfert qui applique au moins une action proportionnelle et une action intégrative (22 ; 22', 19') qui fournit en sortie ladite tension en quadrature (Vq) à appliquer au moteur (15) exprimée dans le repère tournant comporte :
l'utilisation de ladite erreur d'orientation (Eo) comme variable d'entrée d'une fonction de transfert qui applique au moins une action proportionnelle et une action intégrative (22'), qui fournit en sortie un courant en quadrature de référence (Iq*) ;
le calcul d'une erreur de courant (Ei) comme la différence entre le courant en quadrature de référence (Iq*) et un courant en quadrature (Iq) de ladite paire de courants (Id, Iq) ; et
l'utilisation de ladite erreur de courant (Ei) comme variable d'entrée d'une fonction de transfert qui applique au moins une action proportionnelle et une action intégrative (19'), qui fournit en sortie ladite tension en quadrature (Vq) à appliquer au moteur (15) exprimée dans le repère tournant.

8. Procédé selon l'une quelconque des revendications précédentes, **caractérisé en ce que** ledit organe mécanique rotatif est un réducteur de vitesse.

9. Procédé selon la revendication 8, **caractérisé en ce que** ledit réducteur de vitesse est un engrenage à vis sans fin.

10. Système de commande en boucle fermée de la vitesse d'un moteur à courant continu sans balais qui fournit un couple (t) à un organe mécanique rotatif, comportant la réalisation d'une commande module d'un FOC type (10, 20) comportant :
un module configuré pour obtenir (16), à partir d'une triade de courants de phases (Ia, Ib, Ic) de stator du moteur, une paire de courants (Id, Iq) dans un repère de rotation du moteur (15) ;
un module (13) configuré pour obtenir, à partir d'une paire correspondante de tensions (Vq, Vd) dans un repère de rotation du moteur (15), une triade de tensions de phases (Va, Vb, Vc) du moteur (15) ; et
une chaîne (11, 17, 13 ; 11, 22, 13 ; 11, 22', 19', 13) de commande en boucle fermée configurée pour obtenir une tension en quadrature (Vq) de ladite paire correspondante de tensions (Vq, Vd) et comportant des moyens (130) servant à mesurer une orientation du rotor (θ),
ledit système étant configuré pour acquérir une vitesse angulaire de référence (ω*) du moteur à fournir à la commande de type FOC (10, 20),
ledit système étant **caractérisé en ce que** :
ladite chaîne (11, 22, 13 ; 11, 22', 19', 13) de commande en boucle fermée est configurée pour réguler l'orientation du rotor (Θ) de façon à suivre une orientation de référence (Θ*), indépendante de la vitesse du rotor, qui forme un angle de 90° par rapport à une direction d'un champ magnétique (B) de stator, qui tourne avec une vitesse angulaire égale à ladite vitesse angulaire de référence (ω*), **en ce que** ledit système comporte :
un module (21) configuré pour réaliser (120) une intégration de ladite vitesse angulaire de référence (ω*) pour obtenir une orientation de référence (Θ*), et **en ce que** ladite chaîne (11, 22) de commande en boucle fermée comporte :
un module (11) configuré pour calculer (140) une erreur d'orientation (Eo) comme la différence entre ladite orientation de référence (θ*) et ladite orientation mesurée (Θ) ; et
un module (22 ; 22') configuré pour mettre en oeuvre une fonction de transfert qui applique au moins une action proportionnelle et une action intégrative et pour recevoir ladite erreur d'orientation (Eo) comme variable d'entrée et pour fournir en sortie ladite tension en quadrature (Vq) à appliquer au moteur (15) exprimée dans le repère tournant,
ledit module configuré pour obtenir (16) à partir d'une triade de courants de phases (Ia, Ib, Ic) de stator du moteur une paire de courants (Id, Iq) dans un repère de rotation du moteur (15) étant configuré pour appliquer à ladite triade de courants de phases (Ia, Ib, Ic) de stator une transformation de Clarke-Park directe en fonction de ladite orientation de référence (Θ*), et ledit module (13) configuré pour obtenir à partir d'une paire correspondante de tensions (Vq, Vd) dans un repère de rotation du moteur (15) une triade de tensions de phases (Va, Vb, Vc) du moteur (15) comportant l'application d'une transformation de Clarke-Park inverse à ladite paire de tensions (Vq, Vd) en fonction de ladite orientation de référence (Θ*), ledit système étant configuré pour fournir ladite orientation de référence (θ*) au bloc (13) de transformation de Clarke-Park inverse et au bloc (16) de transformation de Clarke-Park directe.

11. Système de commande en boucle fermée selon la revendication 10, **caractérisé en ce que** le module (22') configuré pour mettre en oeuvre une fonction de transfert qui applique au moins une action proportionnelle et une action intégrative est configuré pour utiliser ladite erreur d'orientation (Eo) comme variable d'entrée d'une fonction de transfert qui applique au moins une action proportionnelle et une action intégrative (22') qui fournit en sortie un courant en quadrature de référence (Iq*), et **en ce qu'**il comporte :
un module (11') configuré pour calculer une erreur de courant (Ei) comme la différence entre le courant en quadrature de référence (Iq*) et un courant en quadrature (Iq) de ladite paire de courants (Id, Iq) ; et
un module (11') configuré pour mettre en oeuvre au moins une action proportionnelle et une action intégrative (19') et pour recevoir ladite erreur de courant (Ei) comme variable d'entrée et pour fournir en sortie ladite tension en quadrature (Vq) à appliquer au moteur (15) exprimée dans le repère tournant.

12. Système de commande en boucle fermée selon la revendication 10, **caractérisé en ce qu'**il comporte un module (22 ; 22') qui met en oeuvre une fonction de transfert de type proportionnelle, intégrale et dérivée.

13. Système de commande en boucle fermée selon l'une quelconque des revendications 10 à 12, **caractérisé en ce que** ledit organe mécanique est un réducteur de vitesse.

14. Système de commande en boucle fermée selon l'une quelconque des revendications 10 à 13, **caractérisé en ce que** ledit moteur (15) et ledit réducteur de vitesse sont compris dans un robot et **en ce que** ledit réducteur de vitesse est un engrenage à vis sans fin.
